# EUROPÄISCHE PATENTSCHRIFT

(11) **EP 3 091 667 B1**
(45) Veröffentlichungstag und Bekanntmachung des Hinweises auf die Patenterteilung: **10.07.2019**
(21) Anmeldenummer: 16168235.6
(22) Anmeldetag: 04.05.2016
(51) Int. Cl.: H04B 1/18, H04B 1/28, H04B 1/48

(54) **ANTENNENANORDNUNG MIT VORSPANNUNGSEINHEIT, VERFAHREN ZUM BETREIBEN EINER SOLCHEN ANTENNENANORDNUNG UND ON-BOARD UNIT MIT EINER SOLCHEN ANTENNENANORDNUNG**
BIASED ANTENNA ASSEMBLY, METHOD FOR OPERATING SAID ANTENNA ASSEMBLY AND ON-BOARD UNIT HAVING SAID ANTENNA ASSEMBLY
SYSTEME D'ANTENNES BIAISE, PROCEDE DE FONCTIONNEMENT SYSTEME D'ANTENNES DUDIT ET UNITE EMBARQUEE COMPRENANT UN SYSTEME D'ANTENNES DUDIT

(30) Priorität: 07.05.2015 DE 102015208548; 28.04.2016 DE 102016207321
(43) Veröffentlichungstag der Anmeldung: 09.11.2016
(73) Patentinhaber: Continental Automotive GmbH, 30165 Hannover (DE)
(72) Erfinder: Morhart, Christian, 93083 Obertraubling (DE); Merten, Andre, 93080 Pentling (DE); Peduzzi, Carlo, 78050 Villingen (DE); Lange, Roland, 78086 Brigachtal (DE); Müller, Andreas, 31319 Sehnde (DE)

(56) Entgegenhaltungen:
- CN-A- 103 428 137
- DE-A1- 2 749 839
- DE-A1- 4 410 542
- DE-A1-102011 120 194
- DE-T2- 69 929 103
- DE-T2- 69 935 908
- US-A1- 2007 001 924
- US-A1- 2014 327 494
- US-A1- 2014 347 121

## Beschreibung

Die Erfindung betrifft eine Antennenanordnung und ein Verfahren zum Betreiben einer Antennenanordnung.

In vielen Ländern besteht eine Gebührenpflicht (Mautpflicht) für Fahrzeuge auf Autobahnen und Schnellstraßen. Zur Erfassung der auf solchen Mautstraßen zurückgelegten Strecken sind verschiedene Systeme bekannt. Eines der bisher bekannten Systeme basiert dabei auf der so genannten "Dedicated Short Range Communication" (DSRC) . Eine so genannte On-Board-Unit, welche im Fahrzeug installiert ist, kommuniziert dabei mit Mautportalen (z. B. Empfangsbrücken oder -baken) entlang der mautpflichtigen Straßen, wodurch die zurückgelegte Strecke nachvollzogen werden kann.

Die Kommunikation nach dem DSRC-Standard erfolgt nach dem Master-Slave Prinzip mit einer Frequenz von etwa 5,8 Gigahertz (in europäischen Ländern), wobei das Mautportal der Master ist. Die Reichweite beträgt nur etwa bis zu 50 Meter. Entsprechende Normen für die DSRC-Kurzstrecken-Funkkommunikation werden in Europa vom europäischen Komitee für Normung (CEN) festgelegt, welches beispielsweise die verfügbaren Frequenzbänder, wie auch Protokolle und Kommunikationsstandards festlegt.

Die On-Board-Unit muss im Fahrzeug meist an der Windschutzscheibe befestigt sein, um eine ungestörte Kommunikation zu gewährleisten. Eine Anordnung im Fahrzeugdach oder im Seitenspiegel kann jedoch beispielsweise auch möglich sein. Die On-Board-Unit umfasst dabei wenigstens eine Antenne sowie eine entsprechende Elektronik zur Verarbeitung der Signale. Die Antenne und die Elektronik sind in der On-Board-Unit in der Regel in unmittelbarer Nähe zueinander angeordnet.

Es kann jedoch wünschenswert sein, die Elektronik entfernt von der Antenne im Fahrzeug anzuordnen. Während die Antenne weiterhin im Bereich der Windschutzscheibe (bzw. Fahrzeugdach, Seitenspiegel, o. ä.) angeordnet ist, kann die Elektronik beispielsweise in einem im Armaturenbrett angeordneten Tachographen integriert sein. Wird bei bekannten Anordnungen die Antenne entfernt von der Elektronik angeordnet, können jedoch sehr hohe Verluste in den Verbindungskabeln auftreten.

Mit einem universellen Übertragungsstromkreis und einem Signalübertragungs- und Empfangsstromkreis befasst sich US 2014/0327494 A1.

Ferner betrifft US 2007/0001924 A1 eine Antennenvorrichtung, eine die Antennenvorrichtung verwendende drahtlose Kommunikationsvorrichtung und ein Steuerverfahren zum Steuern der drahtlosen Kommunikationsvorrichtung.

Aus CN 103428137 A ist ein Hochgeschwindigkeitskommunikationschip mit kurzer Reichweite bekannt, der unter anderem eine Sendeeinheit, eine Empfangseinheit, eine digitale Steuereinheit und ein Vorspannungserzeugungsmodul umfasst.

Eine Schaltungsanordnung mit einem Haupttransistor und einer Vorspannungsschaltung ist aus US 2014/0347121 A1 bekannt.

Weiterhin offenbart DE 44 10 542 A1 ein Sende- und Empfangssystem für Mobilfunkgeräte, wobei für die Funktionen Senden und Empfangen gesondert je eine separate Antenne an ein Fahrzeug montiert ist.

Eine Telefonhaltevorrichtung, die eine Antennenstruktur umfasst, für ein Fahrzeug ist aus DE 10 2011 120 194 A1 bekannt.

Eine Windschutzscheibe für ein Fahrzeug mit einer auf einem Fahrzeugdach befestigten Antenne und einem in einem Fahrzeuginnern angeordneten Funkempfangs- und/oder -sendegerät ist aus DE 27 49 839 A1 bekannt.

Einen passiven Transponder für Radiofrequenzidentifizierer, der eine Antenne umfasst, offenbart DE 699 35 908 T2.

Außerdem sind aus DE 699 29 103 T2 ein Verfahren zum Erfassen eines RFID-Geräts in Anwesenheit einer RF-Leseeinheit sowie ein RF-Transpondersystem bekannt.

Aufgabe der Erfindung ist es daher, eine Antennenanordnung bereitzustellen, bei welcher eine entfernte Anordnung von Antenne und Elektronik ohne große Leitungsverluste möglich ist.

Diese Aufgabe wird durch eine Antennenanordnung gemäß Anspruch 1 und ein Verfahren gemäß Anspruch 13 gelöst. Ausgestaltungen und Weiterbildungen des Erfindungsgedankens sind Gegenstand von abhängigen Ansprüchen.

Es wird eine Antennenanordnung mit einer Antenneneinheit und einer mit der Antenneneinheit verbundenen Sende-/Empfangseinheit offenbart, wobei die Sende-/Empfangseinheit eine Verarbeitungseinheit aufweist, die dazu ausgebildet ist, ein von der Antenneneinheit empfangenes Signal zu verarbeiten und Signale an die Antenneneinheit auszusenden. Die Sende-/Empfangseinheit weist weiterhin eine Abwärtsstrecke auf, die dazu ausgebildet ist, Signale von der Antenneneinheit an die Verarbeitungseinheit zu übertragen. Eine Aufwärtsstrecke ist dazu ausgebildet, Signale von der Verarbeitungseinheit an die Antenneneinheit zu übertragen. Eine Umschalteinheit ist dazu ausgebildet, die Aufwärts- und die Abwärtsstrecke zu trennen, wobei die Aufwärtsstrecke und die Abwärtsstrecke parallel zueinander zwischen die Umschalteinheit und die Verarbeitungseinheit geschaltet sind. Eine Vorspannungseinheit ist in der Abwärtsstrecke zwischen der Umschalteinheit und der Verarbeitungseinheit angeordnet und ist dazu ausgebildet, einen Vorstrom oder eine Vorspannung bereitzustellen.

Durch die Vorspannungseinheit in der Abwärtsstrecke kann ein Vorstrom (bzw. eine Vorspannung) bereitgestellt werden, der groß genug ist, um einen einwandfreien Betrieb der Antenneneinheit zu ermöglichen, auch wenn die Antenneneinheit entfernt von der Sende-/Empfangseinheit angeordnet ist.

Die Antenneneinheit kann eine Antenne, einen Hüllkurvendetektor und ein erstes Tiefpassfilter aufweisen. Der Hüllkurvendetektor kann im Abwärtsbetrieb das von der Antenne empfangene Signal gleichrichten. Im Aufwärtsbetrieb kann er das empfangene Trägersignal mit einem von der Antenneneinheit erzeugten Zwischenträgersignal mischen. Das erste Tiefpassfilter kann hohe Frequenzen aus dem empfangenen Signal herausfiltern. Dadurch können Verluste in den Leitungen der Anordnung verringert werden.

Die Vorspannungseinheit kann eine Stromquelle aufweisen. Die Stromquelle kann dabei zwischen der Abwärtsstrecke und einem Bezugspotential angeordnet sein. Durch die Stromquelle kann ein ausreichend hoher Vorstrom bereitgestellt werden.

Die Vorspannungseinheit kann anstatt der Stromquelle auch eine Spannungsquelle aufweisen. Die Spannungsquelle kann zwischen der Abwärtsstrecke und dem Bezugspotential angeordnet sein. Durch die Spannungsquelle kann eine ausreichend hohe Vorspannung bereitgestellt werden.

Die Umschalteinheit kann ein Schaltelement aufweisen. Die Umschalteinheit kann jedoch auch einen ersten Widerstand aufweisen. Durch das Umschaltelement können der Abwärtspfad und der Aufwärtspfad voneinander getrennt werden.

Die Vorspannungseinheit kann eine erste Kapazität, eine zweite Kapazität und einen Verstärker aufweisen, die in Reihe zwischen der Umschalteinheit und der Verarbeitungseinheit angeordnet sind, wobei der Verstärker zwischen der ersten Kapazität und der zweiten Kapazität angeordnet ist. Dadurch kann ein von der Antenneneinheit bereitgestelltes Zwischenfrequenzsignal von dem Vorstrom bzw. der Vorspannung getrennt werden. Der Vorstrom wird durch die Anordnung mit der ersten und zweiten Kapazität und dem Verstärker effektiv geblockt.

Die Stromquelle bzw. die Spannungsquelle kann zwischen einem gemeinsamen Schaltungsknoten zwischen der Umschalteinheit und der ersten Kapazität und dem Bezugspotential angeordnet sein, um weiterhin eine Trennung zwischen einem von der Antenneneinheit bereitgestellten Zwischenfrequenzsignal und dem Vorstrom bzw. der Vorspannung zu ermöglichen.

Die Antenneneinheit und die Sende-/Empfangseinheit sind entfernt voneinander angeordnet. Dadurch können beispielsweise Kosten eingespart werden, indem die Sende-/Empfangseinheit in anderen Komponenten integriert wird oder eine bereits in einer anderen Komponente vorhandene Sende-/Empfangseinheit mitbenutzt wird, so dass keine zusätzliche Sende-/Empfangseinheit erforderlich ist. Eine Verbindung zwischen der Antenneneinheit und der Sende-/Empfangseinheit weist eine Länge von einem Meter oder mehr auf.

Die Antennenanordnung kann ein Umwandlungselement, das ein empfangenes, hochfrequentes Signal in ein Zwischenfrequenz-Signal umwandelt, aufweisen, wobei die Zwischenfrequenz einen Faktor 10 bis 1 000 000 geringer sein kann, als die Frequenz des eingehenden hochfrequenten Signals. Dadurch können beispielsweise frequenzabhängige Verluste im Signalgang zwischen Antennenanordnung und Sende-/Empfangseinheit verringert werden. Dadurch kann ermöglicht werden, die Antennenanordnung mit einem Abstand von beispielsweise 50 cm, 1 m, 2 m oder mehr von der Sende-/Empfangseinheit anzuordnen.

Die Antennenanordnung kann eine Diode aufweisen, die das empfangene Signal moduliert oder demoduliert. Dadurch kann besonders günstig, besonders einfach und mit besonders geringem Energieverbrauch eine Modulation oder Demodulation ermöglicht werden.

Es wird auch ein Verfahren zum Betreiben einer Antennenanordnung mit einer Antenneneinheit und einer mit der Antenneneinheit verbundenen Sende-/Empfangseinheit beschrieben, wobei die Sende-/Empfangseinheit eine Verarbeitungseinheit, eine Abwärtsstrecke, eine Aufwärtsstrecke, eine Umschalteinheit und eine Vorspannungseinheit aufweist. Das Verfahren weist auf das Übertragen von Signalen von der Antenneneinheit an die Verarbeitungseinheit über die Abwärtsstrecke, das Verarbeiten der Signale in der Verarbeitungseinheit, das Übertragen von Signalen von der Verarbeitungseinheit an die Antenneneinheit über die Aufwärtsstrecke, die durch die Umschalteinheit von der Abwärtsstrecke getrennt wird, und das Bereitstellen eines Vorstromes oder einer Vorspannung durch die Vorspannungseinheit, die in der Abwärtsstrecke zwischen der Umschalteinheit und der Verarbeitungseinheit angeordnet ist.

Es wird weiterhin ein Verfahren zum Betreiben einer Antennenanordnung mit einer Antenneneinheit und einer mit der Antenneneinheit verbundenen Sende-/Empfangseinheit beschrieben, wobei die Antennenanordnung gemäß eines Backscatter-Prinzips betrieben wird. Hierbei kann besonders vorteilhaft sein, dass eine eventuelle Verschlüsselung eines Signals, welches von der Antennenanordnung empfangen und modifiziert abgesendet wird, in Unkenntnis des Schlüssels aufrechterhalten werden kann.

Es wird auch ein Verfahren zum Betreiben einer Antennenanordnung mit einer Antenneneinheit und einer mit der Antenneneinheit verbundenen Sende-/Empfangseinheit beschrieben, wobei die Antennenanordnung passiv oder semi-passiv betrieben wird. Damit kann einerseits ein besonders niedriger Energieverbrauch der Antennenanordnung ermöglicht und andererseits kann damit besonders günstig die räumliche Erfassung einer Antenneneinheit in einem beschränkten räumlichen Bereich ermöglicht werden, was beispielsweise eine bessere Zuordnung einer Antenneneinheit zu einem Raumbereich ermöglicht.

Es wird weiterhin eine On-Board-Unit, die zum Beispiel ein Tachograph oder eine On-Board-Unit zur Mauterfassung sein kann, mit einer Antennenanordnung offenbart. Die Antennenanordnung weist eine Antenneneinheit und eine mit der Antenneneinheit verbundene Sende-/Empfangseinheit auf. Die Sende-/Empfangseinheit weist eine Verarbeitungseinheit auf, die dazu ausgebildet ist, ein von der Antenneneinheit empfangenes Signal zu verarbeiten und Signale an die Antenneneinheit auszusenden. Die Sende-/Empfangseinheit weist weiterhin eine Abwärtsstrecke auf, die dazu ausgebildet ist, Signale von der Antenneneinheit an die Verarbeitungseinheit zu übertragen. Eine Aufwärtsstrecke ist dazu ausgebildet, Signale von der Verarbeitungseinheit an die Antenneneinheit zu übertragen. Eine Umschalteinheit ist dazu ausgebildet, die Aufwärts- und die Abwärtsstrecke zu trennen, wobei die Aufwärtsstrecke und die Abwärtsstrecke parallel zueinander zwischen die Umschalteinheit und die Verarbeitungseinheit geschaltet sind. Eine Vorspannungseinheit ist in der Abwärtsstrecke zwischen der Umschalteinheit und der Verarbeitungseinheit angeordnet und ist dazu ausgebildet, einen Vorstrom oder eine Vorspannung bereitzustellen.

Die Erfindung wird nachfolgend anhand der Figuren der Zeichnung näher erläutert, wobei gleiche oder ähnliche Elemente mit denselben Bezugszeichen versehen sind. Es zeigt:
- Figur 1: in einem Blockschaltbild eine Antennenanordnung, bei der die Antenne und die Elektronik in unmittelbarer Nähe zueinander angeordnet sind,
- Figur 2: in einem Blockschaltbild eine Antennenanordnung, bei der die Antenne entfernt von der Elektronik angeordnet ist,
- Figur 3: in einem Blockschaltbild ein Beispiel einer Antennenanordnung gemäß der vorliegenden Erfindung,
- Figur 4: in einem Blockschaltbild ein Beispiel einer Sende-/Empfangseinheit gemäß der vorliegenden Erfindung,
- Figur 5: in einem Blockschaltbild ein Beispiel einer Antennenanordnung gemäß der vorliegenden Erfindung,
- Figur 6: ein Beispiel einer Vorspannungseinheit,
- Figur 7: ein weiteres Beispiel einer Vorspannungseinheit, und
- Figur 8: ein weiteres Beispiel einer Vorspannungseinheit.

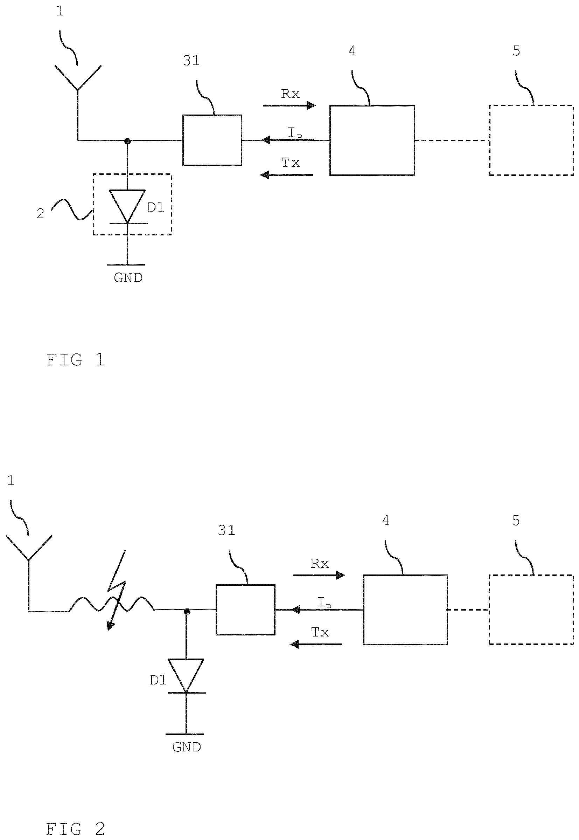

Figur 1 zeigt in einem Blockschaltbild eine Antennenanordnung. Die Antennenanordnung weist eine Antenne 1 auf, die dazu ausgebildet ist Signale zu empfangen und zu senden. Ein Hüllkurvendetektor 2 ist zwischen die Antenne 1 und ein Bezugspotential GND geschaltet. Der Hüllkurvendetektor 2 ist dazu ausgebildet, ein von der Antenne 1 empfangenes Signal gleichzurichten, das heißt ins Basisband umzusetzen. Der Hüllkurvendetektor 2 ist weiterhin dazu ausgebildet, ein zu sendendes Signal bereitzustellen, indem er das empfangene Trägersignal mit einem Zwischenträgersignal mischt. Der Hüllkurvendetektor 2 wird in Figur 1 durch eine Diode D1 gebildet. Dies ist jedoch lediglich ein Beispiel. Der Hüllkurvendetektor 2 kann auf jegliche geeignete Art und Weise implementiert werden.

Die Antennenanordnung weist weiterhin ein Tiefpassfilter 31 auf, das dazu ausgebildet ist, hohe Frequenzen aus einem von der Antenne 1 empfangenen Signal herauszufiltern. Indem nicht das Hochfrequenzsignal zur weiteren Verarbeitung übertragen wird, sondern ein Signal welches nur noch tiefere Frequenzen aufweist, können Verluste in den Leitungen reduziert werden. Das Tiefpassfilter 31 ist mit einem ersten Ausgang mit einem gemeinsamen Schaltungsknoten zwischen der Antenne 1 und dem Hüllkurvendetektor verbunden. Der Hüllkurvendetektor 2, das Tiefpassfilter 31 sowie die Antenne 1 sind dabei in unmittelbarer Nähe zueinander angeordnet. In unmittelbarer Nähe bedeutet in diesem Zusammenhang, dass Verbindungen zwischen den Komponenten eine Länge im Zentimeterbereich aufweisen. Die Diode D1 kann als diskretes Bauteil ausgebildet sein. Sie kann jedoch auch Bestandteil einer integrierten Schaltung, beispielsweise einer monolithischen Mikrowellenschaltung (MMIC, engl. monolithic microwave integrated circuit) sein, in welcher noch weitere Komponenten der Antenennschaltung integriert sind.

Das Tiefpassfilter 31 ist weiterhin mit einer Verarbeitungseinheit 4 verbunden. Die Verbindung zwischen dem Tiefpassfilter 31 und der Verarbeitungseinheit 4 dient dabei sowohl als Abwärtsstrecke Rx zum Bereitstellen von Signalen von der Antenne 1 an die Verarbeitungseinheit 4, als auch als Aufwärtsstrecke Tx zum Bereitstellen von Signalen von der Verarbeitungseinheit 4 an die Antenne 1.

Für den korrekten Betrieb des Hüllkurvendetektors 2 im Abwärtsbetrieb (Bereitstellen von Signalen von der Antenne 1 an die Verarbeitungseinheit 4) ist ein definierter Vorstrom I_{B} erforderlich. Der Hüllkurvendetektor 2 ist häufig als Halbleiterbauelement ausgebildet. Weist der Hüllkurvendetektor 2 beispielsweise eine Halbleiterdiode auf, so besitzt diese einen pn-Übergang. Dieser pn-Übergang muss in der Regel vorgespannt werden. Die Verarbeitungseinheit 4 ist dazu ausgebildet, einen solchen Vorstrom I_{B} bereitzustellen. Die Verarbeitungseinheit 4 ist weiterhin dazu ausgebildet, Zwischenfrequenzsignale von dem Tiefpassfiter 31 zu empfangen und zu verarbeiten. Wird die Antennenanordnung 1 in einer On-Board-Unit zur Mauterfassung in einem System basierend auf der so genannten "Dedicated Short Range Communication" (DSRC) verwendet, entsprechen von der Antenne 1 empfangene Signale dem DSCR-Protokoll. Dieses Protokoll umfasst sowohl eine physikalische (engl. physical layer) als auch höhere Schichten. Die Verarbeitungseinheit 4 kann insbesondere dazu ausgebildet sein, die physikalische Schicht zu verarbeiten. Die höheren Schichten können ebenfalls von der Verarbeitungseinheit 4 oder alternativ von einem zusätzlichen Controller 5 (optional) verarbeitet werden.

Sollen die Antenne 1 und die Verarbeitungseinheit 4 entfernt voneinander angeordnet werden, können beispielsweise auch der Hüllkurvendetektor 2 und das Tiefpassfilter 31 entfernt von der Antenne 1 in unmittelbarer Nähe zu der Verarbeitungseinheit 4 angeordnet sein. Entfernt voneinander angeordnet bedeutet in diesem Zusammenhang, dass eine Verbindung zwischen der Antenne 1 und den restlichen Komponenten eine Länge von etwa einem Meter oder mehr (z. B. bis zu 5 m oder mehr) aufweist. Eine solche Anordnung ist beispielhaft in dem Blockschaltbild in Figur 2 dargestellt. Die entfernte Verbindung wird dabei durch die Wellenform der Verbindung zwischen den Komponenten dargestellt. Werden der Hüllkurvendetektor 2 und das Tiefpassfilter 31 entfernt von der Antenne 1 angeordnet, treten jedoch sehr hohe Kabelverluste (dargestellt durch den Blitz) in der Verbindung auf. Bei Frequenzen von etwa 5,8 GHz, wie sie bei der DSRC (in Europa) üblich sind, liegen die Kabelverluste dabei schnell bei mehr als 1dB/m. Die Leistungsübertragungsbilanz und somit die Qualität wird dadurch leicht so weit reduziert, dass eine Verarbeitung der Signale nicht mehr möglich ist.

Sind der Hüllkurvendetektor 2 und das Tiefpassfilter 31 in unmittelbarer Nähe zu der Antenne 1, jedoch entfernt von der Verarbeitungseinheit 4 angeordnet, ist eine Übertragung mit einer Anordnung wie sie in Figur 1 oder 2 dargestellt ist ebenfalls nicht möglich, da die Verarbeitungseinheit 4 in der Regel den Vorstrom I_{B} nur über eine Distanz von wenigen Zentimetern bereitstellen kann.

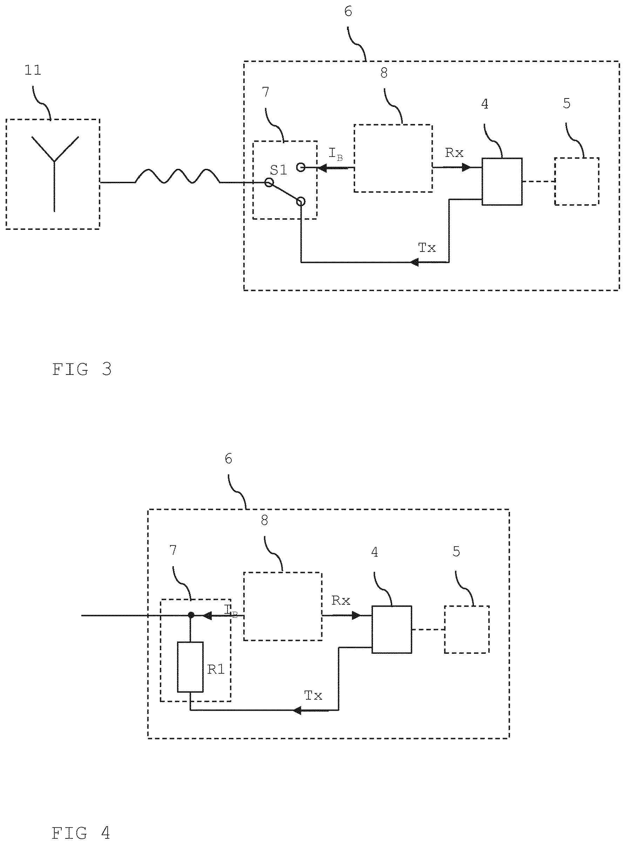

In dem Blockschaltbild gemäß Figur 3 ist ein Beispiel einer Antennenanordnung gemäß der vorliegenden Erfindung dargestellt, mit welcher ein Vorstrom I_{B} auch über größere Entfernungen bereitgestellt werden kann. Eine Antenneneinheit 11 ist dabei entfernt von einer Sende-/Empfangseinheit 6 angeordnet. Die Antenneneinheit 11 kann beispielsweise eine Antenne 1, einen Hüllkurvendetektor 2 und ein erstes Tiefpassfilter 31 aufweisen. In der Sende-/Empfangseinheit 6 sind die Abwärtsstrecke Rx und die Aufwärtsstrecke Tx voneinander getrennt. Eine Umschalteinheit 7 ist dazu ausgebildet die Abwärtsstrecke Rx und die Aufwärtsstrecke Tx voneinander zu trennen. Die Umschalteinheit 7 kann hierfür, wie in Figur 3 dargestellt, beispielsweise ein erstes Schaltelement S1 aufweisen. Mit dem ersten Schaltelement S1 kann entweder die Abwärtsstrecke Rx oder die Aufwärtsstrecke Tx zugeschaltet werden. Dies ist jedoch nur ein Beispiel. Die Trennung kann beispielsweise auch hochohmig mittels eines ersten Widerstandes R1 erfolgen, welcher in die Aufwärtsstrecke Tx geschaltet ist. Dies ist beispielhaft in Figur 4 dargestellt.

In der Abwärtsstrecke Rx ist weiterhin eine Vorspannungseinheit 8 angeordnet. Die Vorspannungseinheit 8 ist dazu ausgebildet, einen Vorstrom I_{B} für die Antenneneinheit 11 bereitzustellen. Aufgrund der entfernten Anordnung der Antenneneinheit 11 und der Sende-/Empfangseinheit 6 ist der durch eine herkömmliche Verarbeitungseinheit 4 bereitgestellte Vorstrom I_{B} zu gering. Daher wird durch die Vorspannungseinheit 8 ein zusätzlicher Vorstrom I_{B} bereitgestellt. Anstatt eines Vorstromes I_{B} kann jedoch beispielsweise auch eine Vorspannung U_{B} bereitgestellt werden.

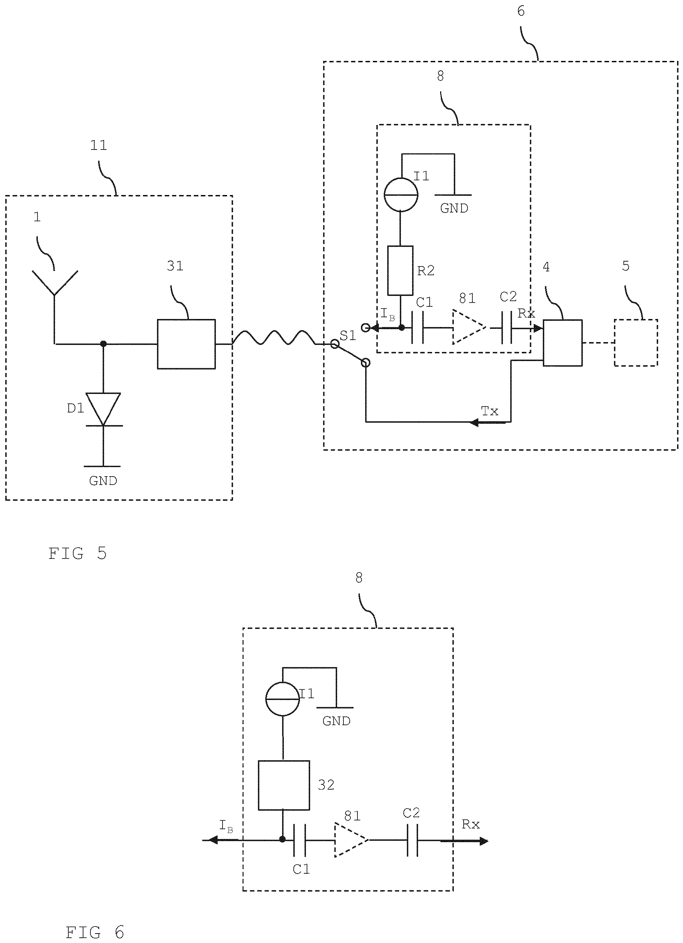

Die Vorspannungseinheit 8 kann, wie in Figur 5 dargestellt, beispielsweise eine erste Kapazität C1, einen Verstärker 81 und eine zweite Kapazität C2 aufweisen, die in Reihe zwischen die Umschalteinheit 7 und die Verarbeitungseinheit 4 geschaltet sind, wobei der Verstärker 81 zwischen der ersten und der zweiten Kapazität C1, C2 angeordnet ist. Der Verstärker 81 ist dabei jedoch nur optional. Der Verstärker 81 kann insbesondere dann vorgesehen werden, wenn die Leitungen zwischen der Antenneneinheit 11 und der Sende-/Empfangseinheit 6 besonders lang sind. Verluste in den Leitungen reduzieren die Reichweite der übertragenen Signale. Ist die Signalstärke nicht ausreichend für die langen Leitungen, können Signale entsprechend mit dem Verstärker 81 verstärkt werden. Ein zweiter Widerstand R2 und eine Stromquelle I1 sind in Reihe zwischen die Abwärtsstrecke, insbesondere zwischen einen Verbindungsknoten zwischen der ersten Kapazität C1 und der Umschalteinheit 7, und das Bezugspotential GND geschaltet, wobei die Stromquelle I1 zwischen dem zweiten Widerstand R2 und dem Bezugspotential GND angeordnet ist. Die Stromquelle I1 ist dazu ausgebildet einen Vorstrom I_{B} bereitzustellen.

Dabei ist es erforderlich, ein von der Antenneneinheit 11 bereitgestelltes Zwischenfrequenzsignal und den Vorstrom I_{B} zu trennen. Der Vorstrom I_{B} wird durch die Anordnung mit der ersten und zweiten Kapazität C1, C2 und dem Verstärker 81 effektiv geblockt . Der zweite Widerstand R2 ist hochohmig und fungiert als Sperr-Widerstand für das Zwischenfrequenzsignal. Anstatt des zweiten Widerstandes R2 kann die Vorspannungseinheit 8 jedoch beispielsweise auch ein zweites Tiefpassfilter 32 aufweisen, wie in Figur 6 dargestellt. Die Grenzfrequenz des zweiten Tiefpassfilters 32 kann dabei so gewählt werden, dass diese unterhalb der Frequenz des Zwischenfrequenzsignals liegt. Nur Signalanteile mit Frequenzen unterhalb der Grenzfrequenz können das zweite Tiefpassfilter 32 annähernd ungeschwächt passieren.

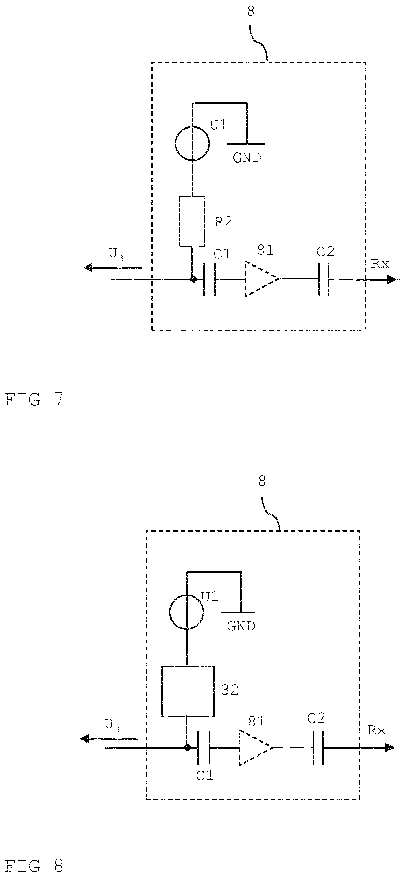

Anstatt einer Stromquelle I1 kann die Vorspannungseinheit 8 auch eine Spannungsquelle U1 aufweisen, wie in den Figuren 7 und 8 dargestellt. Die Vorspannungseinheit 8 stellt der Antenneneinheit 11 dann eine Vorspannung U_{B} zu Verfügung. Die Verwendung einer Stromquelle I1 hat gegenüber einer Ausführungsform mit einer Spannungsquelle U1 den Vorteil, dass ohmsche Verluste in der Verbindung zu der Antenneneinheit 11 keine Auswirkungen auf die Übertragung haben. Bei Verwendung einer Spannungsquelle U1 können ohmsche Verluste in der Verbindung jedoch mit der Vorspannung U_{B} kompensiert werden, wenn die Leitungsverluste bekannt sind. Die Stromquelle I1 und die Spannungsquelle U1 können beispielsweise jeweils mittels Operationsverstärkern und Transistoren implementiert werden. Dies ist jedoch nur ein Beispiel. Die Stromquelle I1 und die Spannungsquelle U1 können auf jegliche geeignete Art und Weise implementiert werden.

Die Vorspannungseinheit 8 kann beispielsweise mit der Verarbeitungseinheit 4 in einem ASIC (anwendungsspezifische integrierte Schaltung, engl. application specific integrated circuit) integriert sein. Die beiden Einheiten können jedoch auch getrennt voneinander implementiert werden. Der von der Vorspannungseinheit 8 bereitgestellte Vorstrom I_{B} (bzw. die Vorspannung U_{B}) können entsprechend auf den Abstand der Sende-/Empfangseinheit 6 von der Antenneneinheit 11 abgestimmt sein, um eine Übertragung von Signalen zwischen den Einheiten auch bei Leitungslängen im Meterbereich zu optimieren.

In einem Ausführungsbeispiel kann ein Fahrzeug, beispielsweise ein Lastkraftwagen, mit einer Antennenanordnung gemäß der vorliegenden Erfindung ausgestattet sein. Die Antennenanordnung kann beispielsweise in einer On-Board-Unit zur Mauterfassung verwendet werden.

Das Mautsystem, in Bezug auf welches die Mauterfassung stattfindet, kann beispielsweise auch eine Kommunikation (zwischen Mautstationen entlang von Mautstrecken und sich auf diesen Mautstrecken bewegenden, mautpflichtigen Fahrzeugen) verwenden, die auf der so genannten "Dedicated Short Range Communication" (DSRC) basiert.

In einer Möglichkeit zur Bemautung sind Mautstationen zur Mauterfassung entlang von Mautstrecken verteilt. Diese Mautstationen können zum Beispiel als Mautbrücken ausgeführt sein. Auf einer solchen Mautbrücke können sich beispielsweise eine oder mehrere Kommunikationseinheiten befinden, welche mit On-Board-Units in auf der Strecke befindlichen Fahrzeugen kommunizieren. Diese Kommunikationseinheiten auf einer Mautbrücke können einen aktiven Sender und einen Empfänger aufweisen.

Weiterhin können diese Kommunikationseinheiten in einem definierten räumlichen Bereich nach beispielsweise On-Board-Units zur Mauterfassung mit einer Antennenanordnung gemäß der vorliegenden Erfindung scannen oder abtasten oder absuchen. Dieser räumliche Bereich kann definiert sein auf eine Fahrtstreckenlänge der Mautstrecke von beispielsweise 10 m, 20 m oder 50 m. Der räumliche Bereich kann räumlich so orientiert eingerichtet sein, dass er beispielsweise in Bezug auf die Fahrtrichtung der Strecke, die von einer Mautbrücke überspannt wird, nur vor der Brücke liegt, d.h. von einem Fahrzeug zuerst durchfahren wird, bevor die Mautbrücke unterfahren wird. Der räumliche Bereich kann aber auch hinter der Brücke liegen. Der räumliche Bereich könnte aber auch auf Anteile sowohl vor als auch hinter der Brücke ausgedehnt sein, sodass insgesamt eine Streckenlänge von 10 m, 20 m, 40 m, 50 m oder 100 m überspannt wird. Der räumliche Bereich könnte auch nicht orientiert sein, sodass er anisotrop um jede Kommunikationseinheit herum einen Raumbereich von beispielsweise 10 m, 20 m, 40 m, 50 m oder 100 m umschließt.

Beispielsweise könnte in dem räumlichen Bereich bei dem Absuchen eine On-Board-Unit zur Mauterfassung mit einer Antennenanordnung gemäß der vorliegenden Erfindung erkannt werden. In einem beispielhaften Mautsystem kann eine Variante eines Kommunikationsvorgangs zwischen einer Mautstation und einer fahrzeugseitigen On-Board-Unit zur Mauterfassung so festgelegt sein, dass nach dem Erkennen einer On-Board-Unit zur Mauterfassung im abgesuchten Bereich ein Informationsaustausch stattfindet, wobei auch zunächst die Gültigkeit der On-Board-Unit zur Mauterfassung überprüft wird und bei Gültigkeit die Bemautung folgen kann. Bei einer derartigen Systemarchitektur des Mautsystems kann es wichtig sein, dass das Absuchen oder Abtasten durch die Mautstation auf einem definierten Raumbereich erfolgt, um eine korrekte Zuordnung und Bemautung zu ermöglichen.

Es kann beispielsweise vorteilhaft sein, dass die eingesetzten On-Board-Units einen niedrigen Energieverbrauch aufweisen. Beispielsweise kann Anforderung eines Mautsystems sein, dass On-Board-Units über Batterien mit Energie versorgt werden und über einen Zeitraum von mehreren Jahren hinweg betriebsbereit bleiben sollen, was vorzugsweise durch einen niedrigen Energieverbrauch der On-Board-Units zu erreichen ist. Besonders vorteilhaft ist außerdem On-Board-Unit zur Mauterfassung mit einer Antennenanordnung gemäß der vorliegenden Erfindung, die besonders einfach aufgebaut und besonders günstig herzustellen ist.

In einem Ausführungsbeispiel erfolgt die Kommunikation zwischen Mautstationen und On-Board-Units zur Mauterfassung (mit einer Antennenanordnung gemäß der vorliegenden Erfindung) nach einem sogenannten Backscatter-Prinzip. Dabei wird von einer Mautstation ein Hochfrequenz-Trägersignal abgesendet, während die On-Board-Units zur Mauterfassung nicht aktiv senden können, sondern ein passives oder semi-passives Hochfrequenz-System aufweisen. Eine beispielhafte passive On-Board-Unit zur Mauterfassung bezieht beispielsweise die gesamte von ihr benötigte Betriebsenergie aus dem elektromagnetischen Feld des empfangenen Signals. Eine beispielhafte semi-passive On-Board-Unit zur Mauterfassung verfügt beispielsweise nur in der Abwärtsstrecke Rx über beispielsweise ein batteriegespeistes Verstärker-Element, während die Aufwärtsstrecke keine aktiven, d.h. zusätzlich energieversorgten, Elemente aufweist. Kommunikation nach einem Backscatter-Prinzip heißt beispielsweise, dass eine On-Board-Unit zur Mauterfassung in passiver oder semi-passiver Bauweise ein von einer Mautstation abgesendetes Hochfrequenz-Trägersignal empfängt und abgewandelt wieder absendet, während eine beispielhafte On-Board-Unit zur Mauterfassung in Abwesenheit eines stationsseitigen Trägersignals nicht senden kann.

In diesem Ausführungsbeispiel liefert also eine Mautstation die Energie in Form eines Hochfrequenz-Trägersignals, welches von den passiven oder semi-passiven On-Board-Units zur Mauterfassung gewissermaßen zurückgestreut wird. Zurückgestreut bedeutet im Zusammenhang mit diesem Ausführungsbeispiel, dass ein Signal nicht nur zurückgespiegelt wird, sondern vor der Rücksendung verändert wird. Beispielsweise kann das Hochfrequenz-Trägersignal in einem Zeitschlitzverfahren moduliert werden. Hierbei kann das Trägersignal beispielsweise je nach Senderichtung von einer Mautstation oder auch von einer On-Board-Unit zur Mauterfassung moduliert werden. In einer beispielhaften Ausführung, bei der die Hochfrequenz-Trägersignale für die Kommunikation ausschließlich von den Mautstationen bereitgestellt und von den On-Board-Units zur Mauterfassung lediglich in modulierter Form reflektiert werden, d.h. in einem Backscatter-Verfahren zurückgestreut werden, wird eine Ausführung von On-Board-Units zur Mauterfassung mit vorteilhaft besonders niedrigem Energieverbrauch ermöglicht.

Ein Vorteil einer Gestaltung eines Mautsystems, das gemäß eines Backscatter-Prinzips betrieben wird und passive oder semi-passive On-Board-Units zur Mauterfassung (beispielsweise mit einer Antennenanordnung gemäß der vorliegenden) in den Fahrzeugen aufweist, liegt in der Beschränkung der Kommunikationsreichweite, die mit einer passiven oder semi-passiven Gestaltung der On-Board-Units zur Mauterfassung einhergeht. Eine Beschränkung der Kommunikationsreichweite kann beispielsweise besonders vorteilhaft genutzt werden, um die Lokalisation der On-Board-Units zur Mauterfassung in einem beschränkten räumlichen Bereich zu ermöglichen und damit beispielsweise auch eine fehlerhafte Bemautung oder Mauterhebung verhindern.

Für beispielhafte passive oder semi-passive Ausgestaltungen der On-Board-Units zur Mauterfassung, die mit besonders niedrigem Energieverbrauch einhergehen, ist es unerlässlich, dass die Verluste auf der Signalstrecke innerhalb einer On-Board-Unit zur Mauterfassung (mit einer Antennenanordnung gemäß der vorliegenden Erfindung) besonders gering sind.

Eine besonders vorteilhafte Ausgestaltung einer On-Board-Unit zur Mauterfassung (mit einer Antennenanordnung gemäß der vorliegenden Erfindung) verwendet daher im Signalgang innerhalb der On-Board-Units zur Mauterfassung auch eine Zwischenfrequenz, welche einen Faktor 10 bis 1000000, besonders vorteilhaft 100 bis 10000, geringer sein kann als die des eingehenden Hochfrequenz-Trägersignals von einer Mautstation, wodurch die Verluste in der On-Board-Unit erheblich reduziert werden und dennoch zugleich eine eventuelle Verschlüsselung auf dem Hochfrequenz-Trägersignal erhalten bleiben kann.

Beispielsweise kann eine Umwandlung eines Hochfrequenzsignals in eine Zwischenfrequenz die Verluste auf dem Signalgang von 50 cm, 1 m , 2 m oder mehr Länge zwischen einer Antennenanordnung und einer Sende-/Empfangseinheit gemäß der vorliegenden Erfindung in einem Maß reduzieren, welches eine passive oder semi-passive Bauweise der Antennenanordnung, beispielsweise als Bestandteil einer On-Board-Unit zur Mauterfassung, erleichtert oder überhaupt erst ermöglicht.

Insbesondere bei Mautsystemen oder Tachographen kann typischerweise eine hohe Sicherheit, beispielsweise durch Verschlüsselung von Signalen, erforderlich sein. Eine Umwandlung eines eingehenden Hochfrequenz-Trägersignals kann beispielsweise in Unkenntnis der Verschlüsselung ausgeführt werden und dabei die Verschlüsselung aufrecht erhalten, und somit eine hohe Sicherheit gewährleisten.

In einem besonders vorteilhaften Ausführungsbeispiel einer passiven oder semi-passiven On-Board-Unit zur Mauterfassung (mit einer Antennenanordnung gemäß der vorliegenden Erfindung) erleichtert die Verwendung einer Zwischenfrequenz im Signalgang, dass die Antenneneinheit 11 und die Sende-/Empfangseinheit 6 einer Antennenanordnung gemäß der vorliegenden Erfindung ent fernt voneinander angeordnet sein können. In diesem besonders vorteilhaften Ausführungsbeispiel ermöglicht die Verwendung einer Zwischenfrequenz, dass der Energieverbrauch beim Betrieb einer On-Board-Unit zur Mauterfassung mit einer derartigen Antennenanordnung besonders niedrig ist. In weiteren beispielhaften Ausgestaltungen können die Antenneneinheit 11 und die Sende-/Empfangseinheit 6 einer Antennenanordnung gemäß der vorliegenden Erfindung 50 cm, 1 m oder 2 m entfernt voneinander angeordnet sein. Beispielsweise könnte eine räumlich entfernte Anordnung von Antenneneinheit 11 und Sende-/Empfangseinheit 6 einer Antennenanordnung gemäß der vorliegenden Erfindung in einem Fahrzeug vorteilhaft ermöglichen, die Antennenanordnung an beispielsweise der Windschutzscheibe anzubringen, beispielsweise in Form eines selbstklebenden oder klebenden oder haftenden Elementes oder mittels Unterdruck fixierten beispielsweise Saugnapfes, und beispielsweise die Sende-/Empfangseinheit im Armaturenbrett anzuordnen.

In einem Ausführungsbeispiel wird für die Modulation oder Demodulation zwischen einem Hochfrequenz-Trägersignal (das beispielsweise von einer Mautstation abgesendet wird) und einer Zwischenfrequenz (die in einer On-Board-Unit zur Mauterfassung mit einer Antennenanordnung gemäß der vorliegenden Erfindung) lediglich eine Diode als einziges aktives Hochfrequenz-Bauteil benötigt.

Beispielhaft erleichtert die Umwandlung einer Hochfrequenz in eine Zwischenfrequenz, die Antenneneinheit 11 und die Sende-/Empfangseinheit 6 einer Antennenanordnung gemäß der vorliegenden Erfindung entfernt anzuordnen und dennoch niedrige Verluste auf dem Signalweg aufzuweisen und/ oder dadurch einen geringen Energieverbrauch aufzuweisen, wodurch beispielsweise die Verwendung in einer batteriebetrieben On-Board-Unit zur Mauterfassung ermöglicht werden kann.

Da bei der vorliegenden Erfindung keine Hochfrequenzsignale, sondern nur Zwischenfrequenzsignale mit Frequenzen von unter etwa 2MHz über lange Leitungen übertragen werden, sind die Verluste in der Anordnung relativ gering im Vergleich zu Lösungen, bei welchen der Hüllkurvendetektor 2 und das Tiefpassfilter 31 entfernt von der Antenne 1 angeordnet sind.

## Patentansprüche

1. Antennenanordnung mit einer Antenneneinheit (11) und einer mit der Antenneneinheit (11) verbundenen Sende-/Empfangseinheit (6), wobei die Sende-/Empfangseinheit (6) aufweist:
eine Verarbeitungseinheit (4), die dazu ausgebildet ist, ein von der Antenneneinheit (11) empfangenes Signal zu verarbeiten und Signale an die Antenneneinheit (11) auszusenden;
eine Abwärtsstrecke (Rx), die dazu ausgebildet ist, Signale von der Antenneneinheit (11) an die Verarbeitungseinheit (4) zu übertragen;
eine Aufwärtsstrecke (Tx), die dazu ausgebildet ist, Signale von der Verarbeitungseinheit (4) an die Antenneneinheit (11) zu übertragen;
eine Umschalteinheit (7), die dazu ausgebildet ist, die Aufwärts- und die Abwärtsstrecke (Tx, Rx) zu trennen, wobei die Aufwärtsstrecke (Tx) und die Abwärtsstrecke (Rx) parallel zueinander zwischen die Umschalteinheit (7) und die Verarbeitungseinheit (4) geschaltet sind; und
eine Vorspannungseinheit (8), die in der Abwärtsstrecke (Rx) zwischen der Umschalteinheit (7) und der Verarbeitungseinheit (4) angeordnet ist, und die dazu ausgebildet ist, einen Vorstrom (I_{B}) oder eine Vorspannung (U_{B}) bereitzustellen;
wobei die Antenneneinheit (11) und die Sende-/Empfangseinheit (6) entfernt voneinander angeordnet sind und wobei eine Verbindung zwischen der Antenneneinheit (11) und der Sende-/Empfangseinheit (6) eine Länge von einem Meter oder mehr aufweist.

2. Antennenanordnung nach Anspruch 1, wobei die Antenneneinheit (11) eine Antenne (1), einen Hüllkurvendetektor (2) und ein erstes Tiefpassfilter (31) aufweist.

3. Antennenanordnung nach Anspruch 1 oder 2, wobei die Vorspannungseinheit (8) eine Stromquelle (I1) aufweist.

4. Antennenanordnung nach Anspruch 1 oder 2, wobei die Vorspannungseinheit (8) eine Spannungsquelle (U1) aufweist.

5. Antennenanordnung nach einem der vorhergehenden Ansprüche, wobei die Umschalteinheit (7) ein Schaltelement (S1) aufweist

6. Antennenanordnung nach einem der Ansprüche 1 bis 5, wobei die Umschalteinheit (7) einen ersten Widerstand (R1) aufweist.

7. Antennenanordnung nach einem der vorhergehenden Ansprüche, wobei die Vorspannungseinheit (8) eine erste Kapazität (C1), eine zweite Kapazität (C2) und einen Verstärker (81) aufweist, die in Reihe zwischen der Umschalteinheit (7) und der Verarbeitungseinheit (4) angeordnet sind, wobei der Verstärker (81) zwischen der ersten Kapazität (C1) und der zweiten Kapazität (C2) angeordnet ist.

8. Antennenanordnung nach Anspruch 3 und Anspruch 7, wobei die Stromquelle (I1) zwischen einem gemeinsamen Schaltungsknoten zwischen der Umschalteinheit (7) und der ersten Kapazität (C1) und einem Bezugspotential (GND) angeordnet ist.

9. Antennenanordnung nach Anspruch 4 und Anspruch 7, wobei die Spannungsquelle (U1) zwischen einem gemeinsamen Schaltungsknoten zwischen der Umschalteinheit (7) und der ersten Kapazität (C1) und einem Bezugspotential (GND) angeordnet ist.

10. Antennenanordnung nach einem der vorhergehenden Ansprüche mit einem Umwandlungselement, das ein empfangenes, hochfrequentes Signal in ein Zwischenfrequenz-Signal umwandelt, wobei die Zwischenfrequenz um einen Faktor 10 bis 1000000 geringer ist, als die Frequenz des eingehenden hochfrequenten Signals.

11. Antennenanordnung nach Anspruch 10, wobei eine Diode das empfangene Signal moduliert oder demoduliert.

12. Antennenanordnung gemäß einem der vorhergehenden Ansprüche, wobei die Antennenanordnung in einer On-Board-Unit angeordnet ist.

13. Verfahren zum Betreiben einer Antennenanordnung mit einer Antenneneinheit (11) und einer mit der Antenneneinheit (11) verbundenen Sende-/Empfangseinheit (6), wobei die Antenneneinheit (11) und die Sende-/Empfangseinheit (6) entfernt voneinander angeordnet sind und eine Verbindung zwischen der Antenneneinheit (11) und der Sende-/Empfangseinheit (6) eine Länge von einem Meter oder mehr aufweist, und die Sende-/Empfangseinheit (6) eine Verarbeitungseinheit (4), eine Abwärtsstrecke (Rx), eine Aufwärtsstrecke (Tx), eine Umschalteinheit (7) und eine Vorspannungseinheit (8) aufweist, wobei das Verfahren aufweist:
Übertragen von Signalen von der Antenneneinheit (11) an die Verarbeitungseinheit (4) über die Abwärtsstrecke (Rx);
Verarbeiten der Signale in der Verarbeitungseinheit (4); Übertragen von Signalen von der Verarbeitungseinheit (4) an die Antenneneinheit (11) über die Aufwärtsstrecke (Tx), die durch die Umschalteinheit (7) von der Abwärtsstrecke (Rx) getrennt wird; und
Bereitstellen eines Vorstromes (I_{B}) oder einer Vorspannung (U_{B}) durch die Vorspannungseinheit (8), die in der Abwärtsstrecke (Rx) zwischen der Umschalteinheit (7) und der Verarbeitungseinheit (4) angeordnet ist.

14. Verfahren nach Anspruch 13, wobei die Antennenanordnung gemäß eines Backscatter-Prinzips betrieben wird.

## Claims

1. Antenna arrangement having an antenna unit (11) and a transmission/reception unit (6) connected to the antenna unit (11), wherein the transmission/reception unit (6) has:
a processing unit (4) designed to process signals received from the antenna unit (11) and to transmit signals to the antenna unit (11);
a downlink (Rx) designed to transmit signals from the antenna unit (11) to the processing unit (4);
an uplink (Tx) designed to transmit signals from the processing unit (4) to the antenna unit (11);
a changeover unit (7) designed to isolate the uplink and the downlink (Tx, Rx), wherein the uplink (Tx) and the downlink (Rx) are connected in parallel with one another between the changeover unit (7) and the processing unit (4); and
a biasing unit (8) arranged in the downlink (Rx) between the changeover unit (7) and the processing unit (4) and designed to provide a biasing current (I_{B}) or a bias (U_{B}) ;
wherein the antenna unit (11) and the transmission/reception unit (6) are arranged at a distance from one another and wherein a connection between the antenna unit (11) and the transmission/reception unit (6) has a length of one metre or more.

2. Antenna arrangement according to Claim 1, wherein the antenna unit (11) has an antenna (1), an envelope detector (2) and a first low-pass filter (31).

3. Antenna arrangement according to Claim 1 or 2, wherein the biasing unit (8) has a current source (I1).

4. Antenna arrangement according to Claim 1 or 2, wherein the biasing unit (8) has a voltage source (U1).

5. Antenna arrangement according to one of the preceding claims, wherein the changeover unit (7) has a switching element (S1).

6. Antenna arrangement according to one of Claims 1 to 5, wherein the changeover unit (7) has a first resistor (R1).

7. Antenna arrangement according to one of the preceding claims, wherein the biasing unit (8) has a first capacitance (C1), a second capacitance (C2) and an amplifier (81), which are arranged in series between the changeover unit (7) and the processing unit (4), wherein the amplifier (81) is arranged between the first capacitance (C1) and the second capacitance (C2).

8. Antenna arrangement according to Claim 3 and Claim 7, wherein the current source (I1) is arranged between a common circuit node between the changeover unit (7) and the first capacitance (C1) and a reference-earth potential (GND).

9. Antenna arrangement according to Claim 4 and Claim 7, wherein the voltage source (U1) is arranged between a common circuit node between the changeover unit (7) and the first capacitance (C1) and a reference-earth potential (GND).

10. Antenna arrangement according to one of the preceding claims, having a conversion element that converts a received, radio-frequency signal into an intermediate-frequency signal, wherein the intermediate frequency is lower by a factor of between 10 and 1 000 000 than the frequency of the incoming radio-frequency signal.

11. Antenna arrangement according to Claim 10, wherein a diode modulates or demodulates the received signal.

12. Antenna arrangement according to one of the preceding claims, wherein the antenna arrangement is arranged in an on-board unit.

13. Method for operating an antenna arrangement having an antenna unit (11) and a transmission/reception unit (6) connected to the antenna unit (11), wherein the antenna unit (11) and the transmission/reception unit (6) are arranged at a distance from one another and a connection between the antenna unit (11) and the transmission/reception unit (6) has a length of one metre or more, and the transmission/reception unit (6) has a processing unit (4), a downlink (Rx), an uplink (Tx), a changeover unit (7) and a biasing unit (8), wherein the method involves:
transmitting signals from the antenna unit (11) to the processing unit (4) via the downlink (Rx);
processing the signals in the processing unit (4);
transmitting signals from the processing unit (4) to the antenna unit (11) via the uplink (Tx), which is isolated from the downlink (Rx) by the changeover unit (7); and
providing a biasing current (I_{B}) or a bias (U_{B}) by means of the biasing unit (8), which is arranged in the downlink (Rx) between the changeover unit (7) and the processing unit (4).

14. Method according to Claim 13, wherein the antenna arrangement is operated according to a backscatter principle.

## Revendications

1. Système d'antenne comportant une unité d'antenne (11) et une unité d'émission/réception (6) connectée à l'unité d'antenne (11), dans lequel l'unité d'émission/réception (6) comporte :
une unité de traitement (4) conçue pour traiter un signal reçu de l'unité d'antenne (11) et pour envoyer des signaux à l'unité d'antenne (11) ;
une liaison descendante (Rx) conçue pour transmettre des signaux de l'unité d'antenne (11) à l'unité de traitement (4) ;
une liaison montante (Tx) conçue pour transmettre des signaux de l'unité de traitement (4) à l'unité d'antenne (11) ;
une unité de commutation (7) conçue pour séparer les liaisons montante et descendante (Tx, Rx), dans lequel la liaison montante (Tx) et la liaison descendante (Rx) sont connectées en parallèle l'une à l'autre entre l'unité de commutation (7) et l'unité de traitement (4) ; et
une unité de polarisation (8) disposée sur la liaison descendante (Rx) entre l'unité de commutation (7) et l'unité de traitement (4) et conçue pour fournir un courant de polarisation (I_{B}) ou une tension de polarisation (U_{B}) ;
dans lequel l'unité d'antenne (11) et l'unité d'émission/réception (6) sont disposées de manière éloignée l'une de l'autre et dans lequel une connexion entre l'unité d'antenne (11) et l'unité d'émission/réception (6) présente une longueur d'un mètre ou plus.

2. Système d'antenne selon la revendication 1, dans lequel l'unité d'antenne (11) comporte une antenne (1), un détecteur d'enveloppe (2) et un premier filtre passe-bas (31).

3. Système d'antenne selon la revendication 1 ou 2, dans lequel l'unité de tension de polarisation (8) comporte une source de courant (I1).

4. Système d'antenne selon la revendication 1 ou 2, dans lequel l'unité de polarisation (8) comporte une source de tension (U1) .

5. Système d'antenne selon l'une des revendications précédentes, dans lequel l'unité de commutation (7) comporte un élément de commutation (S1).

6. Système d'antenne selon l'une des revendications 1 à 5, dans lequel l'unité de commutation (7) comporte une première résistance (R1).

7. Système d'antenne selon l'une des revendications précédentes, dans lequel l'unité de polarisation (8) comprend un premier condensateur (C1), un second condensateur (C2) et un amplificateur (81) disposés en série entre l'unité de commutation (7) et l'unité de traitement (4), dans lequel l'amplificateur (81) est disposé entre le premier condensateur (C1) et le second condensateur (C2).

8. Système d'antenne selon les revendications 3 et 7, dans lequel la source de courant (11) est disposée entre un noeud de circuit commun situé entre l'unité de commutation (7) et le premier condensateur (C1), et un potentiel de référence (GND).

9. Système d'antenne selon les revendications 4 et 7, dans lequel la source de tension (U1) est disposée entre un noeud de circuit commun situé entre l'unité de commutation (7) et le premier condensateur (C1), et un potentiel de référence (GND).

10. Système d'antenne selon l'une des revendications précédente, comprenant un élément de conversion qui convertit un signal à haute fréquence reçu en un signal à fréquence intermédiaire, dans lequel la fréquence intermédiaire est inférieure d'un facteur 10 à 1000000 à la fréquence du signal à haute fréquence entrant.

11. Système d'antenne selon la revendication 10, dans lequel une diode module ou démodule le signal reçu.

12. Système d'antenne selon l'une des revendications précédentes, dans lequel le système d'antenne est disposé dans une unité embarquée.

13. Procédé de mis en oeuvre d'un système d'antenne comportant une unité d'antenne (11) et une unité d'émission-réception (6) reliée à l'unité d'antenne (11), dans lequel l'unité d'antenne (11) et l'unité d'émission/réception (6) sont disposées de manière éloignée l'une de l'autre et une connexion entre l'unité d'antenne (11) et l'unité d'émission/réception (6) présente une longueur d'un mètre ou plus et l'unité d'émission/réception (6) comporte une unité de traitement (4), une liaison descendante (Rx), une liaison montante (Tx), une unité de commutation (7) et une unité de tension de polarisation (8), dans lequel le procédé comprend :
la transmission de signaux de l'unité d'antenne (11) à l'unité de traitement (4) par l'intermédiaire de la liaison descendante (Rx) ;
le traitement des signaux dans l'unité de traitement (4) ;
la transmission de signaux de l'unité de traitement (4) à l'unité d'antenne (11) par l'intermédiaire de la liaison montante (Tx) qui est séparée de la liaison descendante (Rx) par l'unité de commutation (7) ; et
la fourniture d'un courant de polarisation (I_{B}) ou d'une tension de polarisation (U_{B}) par l'unité de tension de polarisation (8) disposée sur la liaison descendante (Rx) entre l'unité de commutation (7) et l'unité de traitement (4).

14. Procédé selon la revendication 13, dans lequel le système d'antenne est mis en oeuvre selon un principe de rétrodiffusion.
